# EUROPÄISCHE PATENTSCHRIFT

(11) **EP 1 207 086 B1**
(45) Veröffentlichungstag und Bekanntmachung des Hinweises auf die Patenterteilung: **27.02.2008**
(21) Anmeldenummer: 01127215.0
(22) Anmeldetag: 16.11.2001
(51) Int. Cl.: B60R 21/20

(54) **Airbagbaueinheit**
Airbag unit
Module de sac gonflable

(30) Priorität: 17.11.2000 DE 20019636 U
(43) Veröffentlichungstag der Anmeldung: 22.05.2002
(73) Patentinhaber: ZF Lemförder Metallwaren AG, 49448 Lemförde (DE); ADAM OPEL AG, 65423 Rüsselsheim (DE)
(72) Erfinder: Wagener, Keit, 49143 Bissendorf (DE); Rick, Ulrich, Dipl.-Ing., 55595 Roxheim (DE)

(56) Entgegenhaltungen:
- DE-A- 4 310 173
- DE-A- 19 743 615
- DE-U- 29 917 645
- US-A- 5 458 363
- US-A- 5 577 764
- US-A- 6 036 222

## Beschreibung

Die Erfindung betrifft eine Airbagbaueinheit eines Insassenrückhaltesystems für Kraftfahrzeuge nach dem Oberbegriff des Patentanspruches 1.

Eine derartige Airbagbaueinheit eines Insassenrückhaltesystems für Kraftfahrzeuge mit einem von einem Airbaggehäuse aufgenommenen, beim Auslösen des Airbags durch einen Gasgenerator zu befüllenden Luftsack sowie einer mit dem Airbaggehäuse einstückig ausgebildeten und mit ihm über Gasdurchtrittsöffnungen verbundenen Diffusorkammer, in welcher der über eine Aufnahmeöffnung eingebrachte und von der Diffusorkammer teilweise umgebene, im Wesentlichen zylinderförmige Gasgenerator an einem axialen Ende fixiert ist, geht beispielsweise aus der DE 43 10 173 A1 hervor. Der Gasgenerator liegt bei dieser bekannten Ausführung in der Aufnahmeöffnung mit einer an einem Dicht- und Entkopplungsring vorhandenen Anschlagfläche an, wobei die Aufnahmeöffnung der Diffusorkammer mittels des den Gasgenerator gegen die Diffusorkammerakustisch entkoppelnden, elastischen Dicht- und Entkopplungsrings abgedichtet ist.

Die US 5,458,363 offenbart eine Airbagbaueinheit eines Insassenrückhaltesystems für Kraftfahrzeuge mit einem von einem Airbaggehäuse aufgenommenen, beim Auslösen des Airbags durch einen Gasgenerator zu befüllenden Luftsack sowie einer mit dem Airbaggehäuse einstückig ausgebildeten und mit ihm über Gasdurchtrittsöffnungen verbundenen Diffusorkammer, in welcher der über eine Aufnahmeöffnung eingebrachte und von der Diffusorkammer teilweise umgebene, im Wesentlichen zylinderförmige Gasgenerator an einem axialen Ende fixiert ist, wobei die Aufnahmeöffnung der Diffusorkammer mittels eines den Gasgenerator gegen die Diffusorkammer akustisch entkoppelnden, elastischen Dicht- und Entkopplungsrings abgedichtet ist. Die zur Zündung des Gasgenerators dienende Zündeinheit liegt seinem fixierten Ende axial gegenüber und der Dicht- und Entkopplungsring ist in der Aufnahmeöffnung zwischen dem Gasgenerator und der Diffusorkammer eingeordnet.

Bei Airbagmodulen ist es erforderlich, die den Gasgenerator aufnehmende Diffusorkammer im Bereich einer in ihrem Gehäuse zum Einführen des Gasgenerators vorgesehenen Aufnahmeöffnung abzudichten. Dies geschieht in vielen Fällen durch ein Verpressen der Diffusorkammer auf den Gasgenerator im Bereich der Aufnahmeöffnung und/oder durch ein Verdeckeln der Diffusorkammer nach der Montage des Gasgenerators. Hierdurch ist eine Vielzahl von Arbeitsschritten und gegebenenfalls der Einsatz zusätzlicher Bauteile erforderlich. Zudem werden einige der Arbeitsschritte bei bereits eingebautem, also quasi "scharfen" Gasgenerator durchgeführt, was aus sicherheitsstechnischer Sicht als ungünstig anzusehen ist. Durch das Verpressen von Diffusorkammer und Gasgenerator ergibt sich aber noch ein weiterer Nachteil. So ist die Automobilindustrie aufgrund umweltpolitischer Bestimmungen gehalten, die Recyclingfähigkeit ihrer Produkte zu erhöhen, wobei das Recycling, aufgrund der unterschiedlichen Materialbeschaffenheit der Teile, deren weitgehende Demontage und Trennung entsprechend der Materialarten verlangt. Die Demontage der Airbagbaueinheit gestaltet sich jedoch im Falle des Verpressens von Diffusorkammer und Gasgenerator relativ schwierig.

Zur Überwindung dieser Probleme wird bereits durch die DE 197 43 615 A1 eine Airbagbaueinheit beschrieben, bei welcher die Abdichtung zwischen der Diffusorkammer und dem Gasgenerator mittels eines zwischen ihnen eingeordneten Dichtrings erfolgt, welcher die Teile gleichzeitig akustisch voneinander entkoppelt. Der Dicht- und Entkopplungsring wird entweder in Ausnehmungen in der Wandung der Diffusorkammer in der Art eines Simmerringes eingeknüpft oder durch seine spezielle Formgebung mittels dafür ausgebildeter Nasen, mit denen er am Diffusorgehäuse vorgesehene Absätze hintergreift, eingehakt. Je nach Ausgestaltung, wird die Diffusorkammer zusätzlich noch verdeckelt. Eine Ausführungsform der in der Schrift beschriebenen Lösung ist dergestalt ausgebildet, dass am Umfang des Gasgenerators eine radial umlaufende Zwischenplatte angeschweißt ist und der in diesem Fall U-förmig ausgebildete Dicht- und Entkopplungsring um die Kanten dieser Zwischenplatte herumgelegt ist.

Durch die in der Schrift offenbarte Lösung verringert sich zwar der Montageaufwand und auch die Demontage wird aufgrund der Abdichtung mit dem Dichtring deutlich verbessert. Jedoch ist nach wie vor eine vergleichsweise hohe Zahl von Montageschritten erforderlich. Außerdem werden auch bei dieser Lösung, je nach Variante, teilweise noch einige der Montageschritte nach dem Einbau des Gasgenerators in die Diffusorkammer durchgeführt.

Aufgabe der Erfindung ist es, eine Airbagbaueinheit der gattungsgemäßen Art so auszubilden, dass die Zahl der Montageschritte weiter verringert wird und dass die Montage mit dem Einbringen des Gasgenerators in die Diffusorkammer und seiner Befestigung abgeschlossen werden kann. Dabei soll eine zuverlässige Abdichtung der Diffusorkammer gewährleistet sein.

Die Erfindung wird durch eine Airbagbaueinheit mit den Merkmalen des Hauptanspruches gelöst. Vorteilhafte Aus- bzw. Weiterbildungen der erfindungsgemäßen Airbagbaueinheit sind durch die Unteransprüche gegeben.

Bei der vorgeschlagenen Airbagbaueinheit wird der im Wesentlichen zylinderförmig ausgebildete Gasgenerator, wie aus dem Stand der Technik bekannt, durch eine Aufnahmeöffnung in die Diffusorkammer vollständig oder teilweise eingebracht und darin fixiert bzw. befestigt. Die Befestigung erfolgt dabei an dem der Zündeinheit gegenüberliegenden axialen Ende des Gasgenerators.

Auf seinem Umfang weist der Gasgenerator einen Flansch auf, welcher Anschlagflächen ausbildet, die nach seinem Einführen in die Aufnahmeöffnung an deren Rand zur Anlage kommen. Zwischen dem Gasgenerator und der Diffusorkammer ist, wie bereits bekannt, ein elastischer Dicht- und Entkopplungsring eingeordnet, welcher den Gasgenerator akustisch gegen die Diffusorkammer entkoppelt und ihre Aufnahmeöffnung abdichtet.

Bei der sich im Hinblick auf das Abdichtungsverhalten als günstig erweisenden erfindungswesentlichen Ausbildung der Airbageinheit weist der Dicht- und Entkopplungsring auf seinem Umfang einen radial vollständig umlaufenden oder mehrere abschnittsweise ausgebildete Absätze auf. Diese Absätze sind, die Aufnahmeöffnung des Diffusorgehäuses umgebend, zwischen der durch den Flansch am Gasgenerator ausgebildeten Anschlagfläche und der Aufnahmeöffnung des Diffusorgehäuses eingeordnet, so dass der Flansch auf der Außenfläche des oder der Absätze des Dicht- und Entkopplungsrings anliegt.

In erfindungswesentlicher Weise wird der Dichtring, bezogen auf das mit der Zündeinheit versehene axiale Ende des Gasgenerators, oberhalb des ausgebildeten Flansches, von dem sich zumindest in diesem Bereich in Richtung des Flansches in seiner Außenkontur konisch erweiternden Gasgenerator ohne weitere Befestigungsmaßnahmen im Klemmsitz gehalten. Erfindungsgemäß ist es vorgesehen, den Dicht- und Entkopplungsring an der Diffusorkammer vorzumontieren. Entsprechend einer alternativen Ausführung kann dabei der Dicht- und Entkopplungsring aber auch am Gasgenerator vormontiert sein und mit diesem gemeinsam in die Aufnahmeöffnung der Diffusorkammer eingeführt werden, bis er darin mit dem Gasgenerator in einen Klemmsitz gelangt..

In jedem Falle ist es aber so, dass die Montage der Airbageinheit mit dem Einführen und Befestigen des Gasgenerators abgeschlossen ist und dabei gleichzeitig der ansonsten nicht in anderer Weise befestigte Dicht- und Entkopplungsring sicher in der Aufnahmeöffnung der Diffusorkammer festgehalten wird. Entsprechend einer möglichen Ausbildungsform der Airbagbaueinheit ragt dabei der Gasgenerator auf der Seite seiner mit der Fahrzeugelektrik über einen Stecker zu verbindenden Zündeinheit aus der Diffusorkammer heraus. Hierdurch sind in besonders vorteilhafter Weise die Kontakte der mit dem Bordnetz zu verbindenden Zündeinheit des Gasgenerators für das Anstecken bzw. Anschließen des Steckers zugänglich. Außerdem wird dadurch, da auch ein Deckel nicht vorhanden ist, eine zusätzliche Kabeldurchführung, welche ebenfalls abzudichten wäre, entbehrlich.

Wie weit der Gasgenerator aus dem Diffusorgehäuse herausragt ist abhängig von der Anordnung des an der Aufnahmeöffnung zu Anlage kommenden Flansches auf dem Umfang des Gasgenerators. Gemäß einer praxisgerechten Ausbildung ragt der Gasgenerator bis zu etwa einem Drittel seiner axialen Erstreckung aus der Diffusorkammer heraus.

Besonders vorteilhaft ist die Erfindung weitergebildet, wenn in dem Dicht- und Entkopplungsring Bypässe zum Abbau eines gegebenenfalls in der Diffusorkammer auftretenden Überdruckes vorgesehen sind. Diese Bypässe werden dabei entweder durch Gasdurchtrittsöffnungen in der Gehäusewand der Diffusorkammer oder im Flansch fortgesetzt. Vorzugsweise besteht der Dicht- und Entkopplungsring aus einer Kombination elastischer und harter Materialien.

Die vorliegende Erfindung weist gegenüber dem bisher bekannten Stand der Technik mehrere Vorteile auf. Zum einen gestaltet sich die Montage des Gasgenerators bei gleichzeitig zuverlässiger Abdichtung der Diffusorkammer besonders einfach. Zum anderen ist auch der Dicht- und Entkopplungsring hinsichtlich seiner Form sehr einfach ausgebildet und ohne zusätzliche Montageschritte in der Aufnahmeöffnung der Diffusorkammer zu befestigen, weil die Befestigung nicht durch seine spezielle Formgebung, sondern lediglich durch das ohnehin erforderliche Einschieben des Gasgenerators in die Gehäuseöffnung bewerkstelligt wird. Im Zuge dessen ist es außerdem als sehr vorteilhaft anzusehen, dass die Kontakte der Zündeinheit des Gasgenerators aufgrund des Fehlens einer Verdeckelung sehr gut für den Anschluss an das Bordnetz des Kraftfahrzeuges zugänglich sind und zusätzliche Abdichtungsmaßnahmen für eine etwaige Kabeldurchführung entfallen.

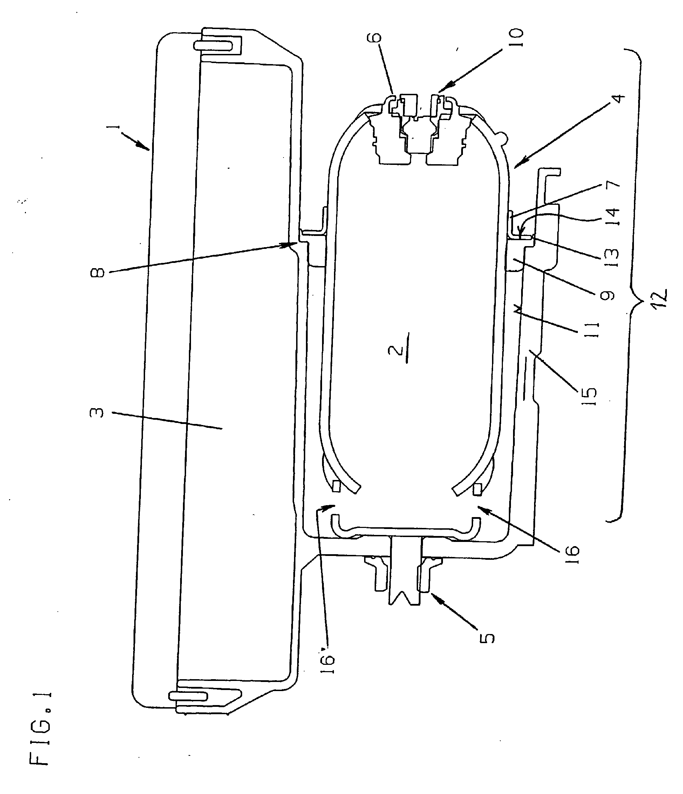

Die Erfindung soll nachfolgend anhand eines Ausführungsbeispieles näher erläutert werden. Hierzu zeigt die Figur 1 eine Prinzipdarstellung der erfindungsgemäßen Airbagbaueinheit in einer Schnittdarstellung.

Die Airbagbaueinheit besteht aus dem Airbaggehäuse 1 und der einstückig mit dem Gehäuse ausgebildeten Diffusorkammer 3. Im oberen Teil des Gehäuses 1 ist der in der Figur nicht dargestellte Luftsack, welcher im Auslösefall des Airbags durch den Gasgenerator 2 gefüllt wird, festgelegt. Wie zu erkennen, ist der Gasgenerator 2 im unteren Teil des Airbaggehäuses 1, nämlich in der Diffusorkammer 3 eingeordnet und dort an seinem in der Zeichnung linksseitigen axialen Ende 5 fixiert. Bei der Montage der Baueinheit wird der im Wesentlichen zylinderförmige Gasgenerator 2 über die Aufnahmeöffnung 4 der Diffusorkammer 3 in das Airbaggehäuse 1 eingeführt. Er wird dabei so weit in die Aufhahmeöffnung 4 eingeschoben, dass er mit den Anschlagflächen 8, welche durch den auf seinem Umfang vorgesehenen, vorzugsweise angeschweißten Flansch 7 ausgebildet sind, an der Aufnahmeöffnung 4 der Diffusorkammer 3 zur Anlage kommt.

Die Abdichtung der Aufnahmeöffnung 4 erfolgt mittels des Dicht- und Entkopplungsringes 9. Dieser ist aus einem elastischen Material oder einer Kombination elastischer und harter Materialien ausgebildet und wird zweckmäßigerweise vor dem Einführen des Gasgenerators 2 in die Aufnahmeöffnung 4 der Diffusorkammer 3 eingelegt.

Es ist jedoch auch möglich, den Dicht- und Entkopplungsring 9 am Gasgenerator 2 vorzumontieren. Allerdings gestaltet sich dann die Montage des Gasgenerators 2 in der Aufnahmeöffnung 4 etwas schwieriger. Einer zusätzlichen Befestigung des Dicht- und Entkopplungsringes 9 bedarf es nicht, da dieser durch den sich zwischen dem axialen Ende 5 und dem Flansch 7 in Richtung des Flansches 7 konisch erweiternden Gasgenerator 2 im Klemmsitz gehalten wird. Vorzugsweise ist der Dicht- und Entkopplungsring 9 so ausgebildet, dass er, wie in der Figur dargestellt, einen axial umlaufenden Absatz 13 bzw. Bund aufweist, der sich zwischen die Aufnahmeöffnung 4 der Diffusorkammer 3 und den am Gasgenerator 2 vorgesehenen Flansch 7 legt.

Je nachdem, an welcher Stelle der Flansch 7 auf dem Umfang des Gasgenerators 2 ausgebildet ist, ragt der Gasgenerator 2 mehr oder weniger weit aus der Diffusorkammer 3 heraus. In besonders vorteilhafter Weise bleibt hierdurch die in der Figur am rechten axialen Ende 10 des Gasgenerators 2 dargestellte Zündeinheit 6 für die Kontaktierung mit dem Bordnetz zugänglich. Da ein mit einem entsprechenden Stecker versehenes Kabel nicht durch einen Deckel oder dgl. in die Diffusorkammer 3 hingeführt werden muss, ist es zudem nicht erforderlich, an einer andernfalls hierfür vorzusehenden Kabeldurchführung zusätzliche Abdichtungsmaßnahmen zu ergreifen.

Im Falle eines Auslösens des Airbags wird in der Zündeinheit 6 eine Zündpille gezündet, welche das Gas aus dem als Hybridgasgenerator ausgebildeten Gasgenerator 2 über die Austrittsöffnungen 16, 16' heraustreibt. Diese Austrittsöffnungen 16, 16' münden, wie ersichtlich, in der Diffusorkammer 3, von welcher das ausströmende Gas dann über in der Figur, aufgrund der Schnittdarstellung, nicht gezeigte Gasdurchtrittsöffnungen der Diffusorkammer 3 in den oberen Teil des Airbaggehäuses 1 und damit in den darin eingeordneten Luftsack gelangt. Es ist dabei als wesentlich anzusehen, dass der Gasgenerator 2 im letzten Montageschritt unter gleichzeitiger Abdichtung mittels des in die Aufnahmeöffnung 4 bereits eingelegten Dicht- und Entkopplungsrings 9 in die Diffusorkammer 3 eingeführt und darin befestigt wird. Hierdurch wird die Arbeitssicherheit insoweit erhöht als ein eventuelles versehentliches Auslösen des bereits scharfen Gasgenerators 2 im Zuge weiterer Montageschritte nicht zu befürchten ist.

Um einen sich aufgrund wechselnder Betriebsbedingungen (insbesondere wechselnder Temperaturen) beim Auslösen des Airbags gegebenenfalls in der Diffusorkammer 3 aufbauenden Überdruck zu vermeiden, können im Dicht- und Entkopplungsring 9 sowie entweder durch die Gehäusewand 15 der Diffusorkammer 3 oder durch den Flansch 7 verlaufende Bypässe vorgesehen sein. Diese sind jedoch in dem dargestellten Beispiel nicht ausgebildet bzw. in der Figur nicht dargestellt. Bezogen auf den Dicht- und Entkopplungsring 9 handelt es sich hierbei um kleine Durchbrüche oder Bohrungen, die aufgrund des elastischen Materials und des Klemmsitzes, in dem der Ring 9 gehalten ist, normalerweise geschlossen sind, aber durch einen Gasdruck in der Diffusorkammer 3, welcher einen vorgegebenen maximalen übersteiget, aufgedrückt werden.

### Bezugszeichenliste:

- 1: Airbaggehäuse
- 2: Gasgenerator
- 3: Diffusorkammer
- 4: Aufnahmeöffnung
- 5: axiales Ende
- 6: Zündeinheit
- 7: Flansch
- 8: Anschlagfläche
- 9: Dicht- und Entkopplungsring
- 10: axiales Ende
- 11: Innenfläche
- 12: axiale Erstreckung
- 13: Absatz
- 14: Außenfläche
- 15: Gehäusewand
- 16, 16': Austrittsöffnungen

## Patentansprüche

1. Airbagbaueinheit eines Insassenrückhaltesystems für Kraftfahrzeuge mit einem von einem Airbaggehäuse (1) aufgenommenen, beim Auslösen des Airbags durch einen Gasgenerator (2) zu befüllenden Luftsack sowie einer mit dem Airbaggehäuse (1) einstückig ausgebildeten und mit ihm über Gasdurchtrittsöffnungen verbundenen Diffusorkammer (3), in welcher der über eine Aukahmeöffnung (4) eingebrachte und von der Diffusorkammer (3) vollständig oder teilweise umgebene, im Wesentlichen zylinderförmige Gasgenerator (2) an einem axialen Ende (5) fixiert ist, wobei der Gasgenerator (2) an der Aufnahmeöffnung (4) mit einer von einem auf dem Umfang des Gasgenerators (2) angeordneten Flansch (7) gebildeten Anschlagfläche (8) anliegt und wobei die Aufnahmeöffnung (4) der Diffüsorkammer (3) mittels eines den Gasgenerator (2) gegen die Diffusorkammer (3) akustisch entkoppelnden, elastischen Dicht- und Entkopplungsrings (9) abgedichtet ist, welcher in der Aufnahmeöffnung (4) zwischen dem Gasgenerator (2) und der Diffusorkammer (3) eingeordnet ist und an der Diffusorkammer (3) vormontierbar ist
**dadurch gekennzeichnet, dass**
die zur Zündung des Gasgenerators (2) dienende Zündeinheit (6) seinem fixierten Ende (5) axial gegenüber liegt und der Dicht- und Entkopplungsring (9) bezogen auf das mit der Zündeineinheit (6) versehene axiale Ende (10) oberhalb des am Gasgenerator (2) ausgebildeten Flansches (7) von dem sich zumindest zwischen dem fixierten Ende (5) und dem Flansch (7) in Richtung des Flansches (7) in seiner Außenkontur konisch erweiternden Gasgenerator (2) an der Innenfläche (11) der Diffusorkammer (3) im Klemmsitz gehalten wird bei welchem radial umlaufend ein Absatz (13) oder abschnittsweise mehrere Absätze ausgebildet sind, welcher oder welche zwischen der Anschlagfläche (8) des Flansches (7) am Gasgenerator (2) und der Aufnahmeöffnung (4), diese umgebend, eingeordnet ist oder sind, wobei der Flansch (7) des Gasgenerators (2) auf der Außenfläche (14) des oder der Absätze (13) des Dicht- und Entkopplungsrings (9) anliegt.

2. Airbagbaueinheit eines Insassenrückhaltesystems nach Anspruch 1, bei welcher der Gasgenerator (2) auf der Seite seiner mit der Fahrzeugelektrik mittels eines Steckers zu verbinden Zündeinheit (6) aus der Diffusorkammer (3) herausragt.

3. Airbagbaueinheit eines Insassenrückhaltesystems nach Anspruch 2, bei welcher der Gasgenerator (2) zu etwa einem Drittel seiner axialen Erstreckung (12) aus der Diffusorkammer (3) herausragt.

4. Airbagbaueinheit eines Insassenrückhaltesystems nach einem der Ansprüche 1 bis 5, bei dem zum Abbau eines gegebenenfalls in der Diffusorkammer (3) auftretenden Überdrucks im Dicht- und Entkopplungsring (9) sowie in der Gehäusewand (15) der Diffusorkammer (3) eine oder mehrere Bypassöffnungen vorgesehen sind.

5. Airbagbaueinheit eines Insassenrückhaltesystems nach einem der Ansprüche 1 bis 5, bei dem zum Abbau eines gegebenenfalls in der Diffusorkammer (3) auftretenden Überdrucks im Dicht- und Entkopplungsring (9) sowie in dem Flansch (7) des Gasgenerators (2) eine oder mehrere Bypassöffhungen vorgesehen sind.

6. Airbagbaueinheit eines Insassenrückhaltesystems nach einem der Ansprüche 1 bis 7, bei dem der Dicht- und Entkopplungsring (9) aus einer Kombination elastischer und harter Materialien ausgebildet ist.

## Claims

1. Airbag unit of an occupant restraint system for motor vehicles with an airbag which is accommodated by an airbag housing (1) and is to be filled by a gas generator (2) when the airbag is triggered, as well as a diffuser chamber (3) which is formed in one piece with the airbag housing (1), is connected to the latter via gas passage openings and in which the substantially cylindrical gas generator (2), which is introduced via a receiving opening (4) and is completely or partly surrounded by the diffuser chamber (3), is fixed at an axial end (5), wherein the gas generator (2) lies against the receiving opening (4) with a stop face (8) formed by a flange (7) provided at the circumference of the gas generator (2), and wherein the receiving opening (4) of the diffuser chamber (3) is sealed by means of a resilient sealing and decoupling ring (9), which acoustically decouples the gas generator (2) from the diffuser chamber (3), is arranged in the receiving opening (4) between the gas generator (2) and the diffuser chamber (3) and can be pre-assembled at the diffuser chamber (3),
**characterised in that**
the firing unit (6) serving to fire the gas generator (2) lies axially opposite its fixed end (5) and, related to the axial end (10) provided with the firing unit (6), the sealing and decoupling ring (9) is held in a clamp fit at the inner face (11) of the diffuser chamber (3) above the flange (7) formed at the gas generator (2) by the gas generator (2), which widens conically in its outer contour in the direction of the flange (7) at least between the fixed end (5) and the flange (7), at which ring a shoulder (13) extending radially all round is formed or a plurality of shoulders are formed in sections, which shoulder or shoulders is or are arranged between the stop face (8) of the flange (7) at the gas generator (2) and the receiving opening (4), surrounding the latter, wherein the flange (7) of the gas generator (2) lies against the outer face (14) of the shoulder or shoulders (13) of the sealing and decoupling ring (9).

2. Airbag unit of an occupant restraint system according to Claim 1, in which the gas generator (2) projects out of the diffuser chamber (3) on the side of its firing unit (6) which is to be connected to the vehicle electrics by means of a plug.

3. Airbag unit of an occupant restraint system according to Claim 2, in which the gas generator (2) projects out of the diffuser chamber (3) by approximately one third of its axial extent (12).

4. Airbag unit of an occupant restraint system according to any one of Claims 1 to 5, in which one or a plurality of bypass opening(s) is/are are provided in the sealing and decoupling ring (9) and in the housing wall (15) of the diffuser chamber (3) in order to reduce an overpressure which may occur in the diffuser chamber (3).

5. Airbag unit of an occupant restraint system according to any one of Claims 1 to 5, in which one or a plurality of bypass opening(s) is/are are provided in the sealing and decoupling ring (9) and in the flange (7) of the gas generator (2) in order to reduce an overpressure which may occur in the diffuser chamber (3).

6. Airbag unit of an occupant restraint system according to any one of Claims 1 to 7, in which the sealing and decoupling ring (9) is formed from a combination of resilient and rigid materials.

## Revendications

1. Module de sac gonflable de sécurité d'un système de retenue d'occupants pour véhicules automobiles, comprenant un sac gonflable de sécurité rangé dans un boîtier (1) de sac gonflable de sécurité, destiné à être gonflé par un générateur de gaz (2) lors du déclenchement du sac gonflable de sécurité, et une chambre de diffusion (3) formée d'un seul tenant avec le boîtier (1) du sac gonflable de sécurité et reliée à celui-ci par l'intermédiaire d'ouvertures de passage des gaz, chambre dans laquelle le générateur de gaz (2) introduit à travers une ouverture réceptrice (4), entièrement ou partiellement entouré par la chambre de diffusion (3), présentant une forme essentiellement cylindrique, est fixé par l'une des extrémités axiales (5), le générateur de gaz étant en appui sur l'ouverture réceptrice (4) par l'intermédiaire d'une surface de butée (8) formée sur une bride (7) disposée sur le pourtour du générateur de gaz (2), et l'ouverture réceptrice (4) de la chambre de diffusion (3) étant obturée de façon étanche au moyen d'une bague élastique d'étanchéité et de découplage (9) assurant un découplage acoustique du générateur de gaz (2) par rapport à la chambre de diffusion (3), la bague étant disposée dans l'ouverture réceptrice (4) et intercalée entre le générateur de gaz (2) et la chambre de diffusion (3), et pouvant être pré-montée sur la chambre de diffusion (3),
**caractérisé en ce que**
l'unité d'amorce (6) servant à allumer le générateur de gaz (2) est située axialement à l'opposé de l'extrémité fixe (5) de celui-ci, et que, vu par rapport à l'extrémité axiale (10) pourvue de l'unité d'amorce (6), la bague d'étanchéité et de découplage (9) est maintenue par serrage contre la face intérieure (11) de la chambre de diffusion (3), au-dessus de la bride (7) formée sur le générateur de gaz (2), par le générateur de gaz (2) dont le contour extérieur s'élargit selon une forme conique en direction de la bride (7), au moins entre l'extrémité fixe (5) et la bride (7), un talon radial périphérique (13), ou plusieurs talons partiels, étant formée(s) à ce niveau, qui est ou sont intercalé(s) entre la surface de butée (8) de la bride (7) ménagée sur le générateur de gaz (2) et l'ouverture réceptrice (4), entourant celle-ci, la bride (7) du générateur de gaz (2) étant en appui sur la surface extérieure (14) du ou des talon(s) (13) de la bague d'étanchéité et de découplage (9).

2. Module de sac gonflable de sécurité d'un système de retenue d'occupants selon la revendication 1, dans lequel le générateur de gaz (2) fait saillie à l'extérieur de la chambre de diffusion (3), du côté de celui-ci, qui est pourvu de son unité d'amorce (6) devant être reliée au circuit électrique du véhicule par l'intermédiaire d'un connecteur.

3. Module de sac gonflable de sécurité d'un système de retenue d'occupants selon la revendication 2, dans lequel le générateur de gaz (2) fait saillie à l'extérieur de la chambre de diffusion (3) sur environ un tiers de son étendue axiale (12).

4. Module de sac gonflable de sécurité d'un système de retenue d'occupants selon l'une des revendications 1 à 3, dans lequel, afin d'évacuer une surpression éventuelle se créant dans la chambre de diffusion (3), une ou plusieurs dérivation(s) est/sont prévue(s) dans la bague d'étanchéité et de découplage (9), ainsi que dans la paroi de boîtier (15) de la chambre de diffusion (3).

5. Module de sac gonflable de sécurité d'un système de retenue d'occupants selon l'une des revendications 1 à 3, dans lequel, afin d'évacuer une surpression éventuelle se créant dans la chambre de diffusion (3), une ou plusieurs dérivation(s) est/sont prévue(s) dans la bague d'étanchéité et de découplage (9), ainsi que dans la bride (7) du générateur de gaz (2).

6. Module de sac gonflable de sécurité d'un système de retenue d'occupants selon l'une des revendications 1 à 5, dans lequel la bague d'étanchéité et de découplage (9) est réalisée en une combinaison de matériaux élastiques et durs.
